# EUROPÄISCHE PATENTSCHRIFT

(11) **EP 1 270 356 B1**
(45) Veröffentlichungstag und Bekanntmachung des Hinweises auf die Patenterteilung: **04.01.2006**
(21) Anmeldenummer: 02012424.4
(22) Anmeldetag: 10.06.2002
(51) Int. Cl.: B60T 17/08, B60T 17/00

(54) **Verschlusskörper für Atmungsöffnungen von Gehäusen**
Cap for closure of vents in housings
Bouchon pour obturer les mise à l'air des carters

(30) Priorität: 25.06.2001 DE 10130555
(43) Veröffentlichungstag der Anmeldung: 02.01.2003
(73) Patentinhaber: KNORR-BREMSE SYSTEME FÜR NUTZFAHRZEUGE GMBH, 80809 München (DE)
(72) Erfinder: Gravier, Damien, 81476 München (DE)

(56) Entgegenhaltungen:
- EP-A- 1 065 118
- WO-A-96/26093
- WO-A-97/41021
- US-A- 6 029 447
- US-A- 6 143 675

## Beschreibung

Die vorliegende Erfindung betrifft ein Gehäuse mit wenigstens einer Atmungsöffnung, insbesondere ein Bremszylindergehäuse von Bremszylindern oder einen Bremssattel für Nutz- als auch für Schienenfahrzeuge, nach dem Oberbegriff des Anspruchs 1.

Bei aus der Praxis bekannten Bremszylindern sind Atmungsöffnungen im Bremszylindergehäuse vorzusehen. Diese Atmungsöffnungen werden üblicherweise als Bohrung im Bremszylindergehäuse ausgeführt. Dabei sollen Atmungsöffnungen im eingebauten bzw. im betriebsfertigen Zustand des Bremszylinders regelmäßig nach unten zeigen, so dass im Inneren des Gehäuses befindliche oder in das Innere des Bremszylindergehäuses eingedrungene Feuchtigkeit durch diese Atmungsöffnung nach unten wieder hinauslaufen kann. Nachteilig dieser in der Praxis ansonsten bewährten Atmungsöffnung ist, dass Staub, Schmutz oder dgl. durch die Atmungsöffnung ins Innere des Bremszylindergehäuses eindringen können und dort zu Beschädigung der im Bremszylindergehäuse befindlichen Bauteile, wie z.B. der dortigen Membran führen können. Weiterhin ist es von Nachteil, dass durch diese Öffnung auch Feuchtigkeit, sei es in Form von Wasserdampf, Nebel, Spritz- oder Regenwasser eindringen kann und wiederum zu Beschädigungen, beispielsweise durch Rost, an den im Inneren des Bremszylindergehäuses befindlichen Teilen führt.

In der WO 97/41 021 sind Entlüftungsöffnungen eines kombinierten Betriebsbrems- und Parkbremszylinders mittels gasdurchlässiger Filterelemente verschlossen, welche in Filtergehäusen untergebracht sind, welche wiederum an der radial äußeren Umfangsfläche des Zylinders gehalten sind. Gemäß der US 6,029,447 wird ein Filterelement durch eine auf den Zylinder kopfseitig befestigte Platte gegen die Entlüftungsöffnung niedergehalten. Diese Arten der Ausführung sind jedoch wegen des relativ hohen Montage- und Fertigungsaufwands sowie der relativ hohen Teilezahl als negativ zu beurteilen.

Aufgabe der vorliegenden Erfindung ist es, Mittel vorzuschlagen, mit denen die vorstehend genannten Nachteile vermieden werden können. Insbesondere ist es Aufgabe der vorliegenden Erfindung, ein Gehäuse mit wenigstens einer Atmungsöffnung vorzuschlagen, das die vorstehend genannten Nachteile ausschließt.

Diese Aufgabe wird gelöst durch die Merkmale des Anspruchs 1.

Bei dem erfindungsgemäßen Gehäuse ist die Atmungsöffnung von einem Verschlusskörper verschlossen, welcher aus einem Material einstückig hergestellt ist, das Luft- und/oder Feuchtigkeit aus dem Inneren des Gehäuses entweichen lässt, ein Eindringen von Schmutz und/oder Feuchtigkeit jedoch verhindert. Indem vorgeschlagen wird, die in der Praxis regelmäßig offengelassene Atmungsöffnung zu verschließen, wird in vorteilhafter Weise verhindert, dass durch diese verschlossene Atmungsöffnung Schmutz, Staub und/oder Feuchtigkeit in das Innere des Bremszylindergehäuses eindringen können. Indem jedoch zugleich vorgeschlagen wird, als Material ein solches Material für diesen Verschlusskörper auszuwählen, das Luft- und/oder Feuchtigkeit aus dem Inneren des Bremszylindergehäuses entweichen lässt, ein Eindringen von Schmutz und/oder Feuchtigkeit jedoch verhindert, wird gleichzeitig sichergestellt, dass im Gehäuse befindliche Feuchtigkeit auf jeden Fall aus diesem entweichen kann. Da der Verschlusskörper aus einem solchen Material einstückig hergestellt ist, ist kein Trägerkörper oder kein zusätzliches Gehäuse mehr notwendig, wodurch sich die Montage und Fertigung gegenüber dem Stand der Technik wesentlich vereinfacht.

Darüber hinaus bietet das erfindungsgemäße Gehäuse den Vorteil, dass nicht mehr darauf geachtet werden muss, dass die Atmungsöffnung, wie beispielsweise bei einem im betriebsfertigen Zustand am Nutzfahrzeug montierten Bremszylinders, nach unten weist. Denn indem diese Öffnung durch den erfindungsgemäßen Verschlusskörper verschlossen sind, kann keine Feuchtigkeit von außen her eindringen, und zwar unabhängig von der Richtung. Gleiches gilt für Schmutz oder Staub. Eine Orientierung der Atmungsöffnung nach unten zur Vermeidung des Eindringens von der Schwerkraft folgendem Schmutz, Staub, Flüssigkeit oder dergleichen von oben her, ist nicht mehr notwendig. Eine Ausrichtung der Öffnung nach unten, um ein der Schwerkraft folgendes Austreten von möglicherweise im Bremszylindergehäuse befindlicher Feuchtigkeit zu ermöglichen, ist im Prinzip ebenfalls entbehrlich. Denn ein vorzugsweise porosiertes Material, das Luft- und/oder Feuchtigkeit aus dem Inneren eines Bremszylindergehäuses entweichen, insbesondere durch sich hindurch hinausdiffundieren lässt, ist üblicherweise so aufgebaut, dass es in dem durch das Gehäuse definierten, abgeschlossenen Raum befindliche Feuchtigkeit ähnlich einem Schwamm augrund dessen Porosität aufnimmt bzw. aufsaugt, mit seinem kapillaren Pumpeffekt zu dessen äußerer Oberfläche befördert und dort wieder an die Umgebungsluft abgibt.

Demzufolge kann bei einem beispielsweise als Bremszylindergehäuse ausgebildeten Gehäuse in besonders vorteilhafter Weise der Faltenbalg im als Federspeicher ausgebildeten Bremszylinder eingespart werden. Zudem entfällt die Notwendigkeit des Vorhaltens einer Vielzahl von Bremszylindergehäusevarianten bzw. daran angeordneten Befestigungspunkten, um bei aus der Praxis bekannten Bremszylindern sicherstellen zu können, dass die Atmungsöffnung nach Montage am Nutzfahrzeug auch nach unten zeigt, da es auf deren Orientierung nicht mehr zwingend ankommt. Dies bringt eine Reduzierung der Variantenvielfalt mit sich, was sich wiederum in einer Kostensenkung positiv bemerkbar macht.

Der erfindungsgemäße Verschlusskörper kann ebenfalls in vorteilhafter Weise im Bremssattel von Bremsanlagen zum Einsatz gelangen. Auch bei Bremssätteln ist einerseits ein möglichst guter bzw. dichter Abschluss des Gehäuses erwünscht und andererseits soll aber dem widersprechend möglicherweise darin befindliche Feuchtigkeit durch Atmungsöffnungen entweichen können. Hier kann der Verschlusskörper in vorteilhafter Weise eine gewünschte Atmungsöffnung verschließen, so dass einerseits kein Schmutz, Staub, Feuchtigkeit oder dergleichen eindringen kann, aber andererseits gewährleistet ist, dass darin unerwünschte Feuchtigkeit entweichen kann.

Des weiteren kann der erfindungsgemäße Verschlusskörper in vorteilhafter Weise auch in anderen Gehäusen, wie beispielsweise von Bremsanlagenkomponenten Verwendung finden, wobei keine Beschränkung auf Nutz- oder Schienenfahrzeuge gegeben ist, sondern auch Flugzeuge oder andere Transportmitteln mit umfasst sind.

In einer bevorzugten Ausführungsform ist der Verschlusskörper aus porosiertem bzw. gesintertem PTFE hergestellt. Er kann aber auch in einer weiter bevorzugten Ausführungsform aus Kunststoff, insbesondere aus Permaflon ® oder Permeon ® hergestellt sein.

Diese Materialien funktionieren im Prinzip ähnlich einer semipermeablen Membran oder einem atmungsaktiven Gewebe und weisen so etwas wie eine kapillare Pumpwirkung auf, die dafür sorgt, dass Feuchtigkeit, die sich im Innenraum des Gehäuses befindet und sich an der dem Innenraum des Bremszylinders zugewandten Oberfläche des Verschlusskörpers absetzt, durch das Material hindurch diffundiert, damit zu dessen äußerer Oberfläche transportiert wird und dort nach außen hin abgegeben werden kann. Umgekehrt weisen all diese Materialien die Fähigkeit auf, dass sie Feuchtigkeit ebenso wenig wie Staub und Schmutz von außen nicht nach innen eindringen lassen.

In einer weiter bevorzugten Ausführungsform ist der erfindungsgemäße Verschlusskörper zylindrisch ausgebildet. Da Atmungsöffnungen in den meisten Fällen aus Kostengründen in das Gehäuse gebohrt oder gestanzt werden, weisen diese häufig einen runden Querschnitt auf. Die zylindrische Form des Verschlusskörpers ermöglicht dann eine besonders gute Anpassung an den runden Querschnitt der Atmungsöffnungen. Darüber hinaus sind aber auch andere Querschnitte des Verschlusskörpers denkbar, je nachdem, welchen Querschnitt die zu verschließende Atmungsöffnung aufweist.

In einer weiter bevorzugten Ausführungsform ist der Verschlusskörper zumindest teilweise hohl ausgebildet. Dies bietet den Vorteil, dass dessen, dem Innenraum des Gehäuses zugewandte Oberfläche gegenüber dem durch die Atmungsöffnung vorgegebenen Querschnitt deutlich vergrößert werden kann. Damit steht eine deutlich vergrößerte Oberfläche zur Aufnahme und zum Austausch der im Gehäuse befindlichen Feuchtigkeit zur Verfügung. In Folge dessen bietet eine erfindungsgemäß verschlossene, atmungsaktive Öffnung gegenüber einer offenen Atmungsöffnung nicht nur die vorstehend diskutierten Vorteile, sondern es ist zusätzlich eine Verbesserung der Feuchtigkeitsableitung nach außen erreichbar.

Der erfindungsgemäße Verschlusskörper weist in einer weiter bevorzugten Ausführungsform einen vorzugsweise linsenartig ausgebildeten Kopf auf, dessen Durchmesser größer ist als der Durchmesser des restlichen Verschlusskörpers. Auf diese Weise wird mit einfachen Mitteln sichergestellt, dass der Verschlusskörper beim Einfügen in die Atmungsöffnung nicht durch diese hindurchgestoßen werden kann. Zugleich werden die Ränder aufgrund der Überlappung des Verschlusskörperkopfes sauber dichtend abgeschlossen. Dabei ist es weiterhin möglich, den unterhalb des Kopfes befindlichen Abschnitt mit einer Einschnürung auszustatten, die im wesentlichen dem Innendurchmesser der Atmungsöffnung gegebenenfalls zuzüglich einem geringen Übermaß entspricht. Demgegenüber kann der restliche Teil des Verschlusskörpers mit einem etwas größeren Durchmesser versehen werden, so dass beim Eindrücken des Verschlusskörpers in die Atmungsöffnung zunächst zwar ein Anfangswiderstand zu überwinden ist, bis der etwas größere Körperabschnitt durch die Öffnung hindurchgetreten ist, sich daran anschließend aber ein Einrasteffekt ergibt, wenn der Rand der Atmungsöffnung in Anlage mit der Einschnürung unterhalb des Kopfes gelangt. Dies bietet den weiteren Vorteil, dass ein so eingeklemmter Verschlusskörper auch bei Erschütterungen oder dergleichen äußeren Krafteinwirkungen zuverlässig in der zu verschließenden Atmungsöffnung verbleibt.

Die vorstehend diskutierte Erfindung wird nachfolgend an einem Ausführungsbeispiel anhand der Zeichnung weiter erläutert. Es zeigt:

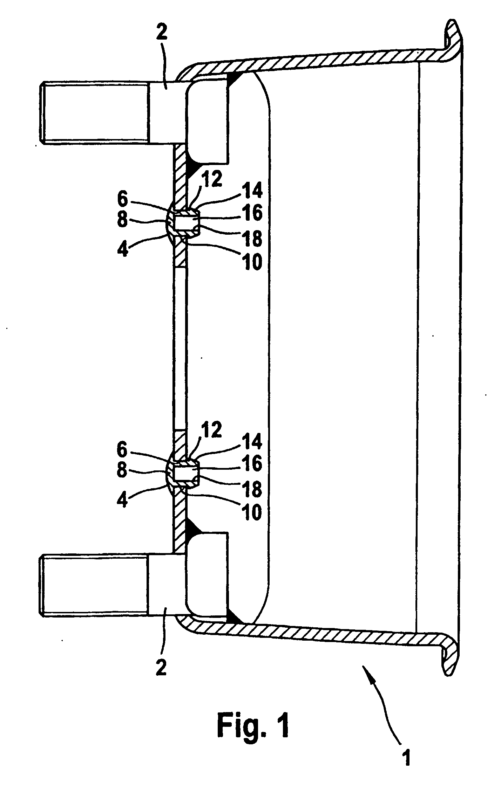

- Fig. 1: einen Querschnitt durch einen Boden eines beispielhaften Bremszylindergehäuseabschnitts mit erfindungsgemäßen Verschlusskörpern.

In dieser einzigen Figur ist in beispielhafter Weise der bodenseitige Teil eines Bremszylindergehäuses 1 im Schnitt dargestellt. Das Bremszylindergehäuse 1 verfügt über darin bzw. daran befestigte Montagemittel 2, die in Form von Gewindebolzen ausgebildet sind und zur Befestigung des Bremszylinders 1 am Fahrzeug dienen. Im Boden sind zwei, mit erfindungsgemäßen Verschlusskörpern 4 verschlossene Atmungsöffnungen 6 erkennbar.

Die Verschlusskörper 4 weisen einen Kopf 8 auf, der in dieser Ausführungsform linsenförmig ausgebildet ist. Der Kopf 8 des Verschlusskörpers 6 weist seinerseits einen größeren Querschnitt auf, als die Atmungsöffnung 6. Weiterhin kann der Verschlusskörper 4 in wenigstens 2 weitere Abschnitte 10 und 12 untergliedert werden. Abschnitt 10 repräsentiert im Prinzip eine Art Einschnürung. Diese Einschnürung kann entweder durch entsprechende Formgebung vorgegeben werden und weist im wesentlichen den selben Querschnitt wie die Atmungsöffnung auf, gegebenenfalls zuzüglich einem gewissen Übermaß, damit eine ausreichende Flächenpressung für eine gute Abdichtung im Anlagebereich Atmungsöffnungsrandes mit dem darin sitzenden Abschnitt 10 zur Verfügung steht. Diese Einschnürung kann aber auch durch Pressung entstehen, wenn der Abschnitt 10 denselben Querschnitt wie der Abschnitt 12 aufweist, sofern der innerhalb des Gehäuses 1 befindliche Abschnitt 12 einen Querschnitt aufweist, der größer ist als der Querschnitt der Atmungsöffnung 6. Der Verschlusskörper 4 kann dem Innenraum des Gehäuses 1 zugewandt über eine Fase 14 verfügen, die eine Einführung in die Atmungsöffnung 6 erleichtert.

Weiterhin kann der Verschlusskörper 4 innen zumindest teilweise hohl ausgebildet sein. Der in der dargestellten Ausführungsform erkennbare Hohlraum 16 ist so dimensioniert, dass die dem Innenraum des Gehäuses 1 zugewandte Oberfläche des Verschlusskörpers 4 deutlich größer gestaltet werden kann als der Querschnitt der Atmungsöffnung 6. Auf diese Weise können Atmungsöffnungen trotz möglichst großem Austauschquerschnitt möglichst klein gehalten werden. Hierbei sind Flächenverhältnisse der dem Innenraum zugewandten Oberfläche 18 des Verschlusskörpers 4 zum Querschnitt der Atmungsöffnung von 1,5:1 bis 5:1, vorzugsweise im Bereich von 2:1 bis 3:1 erzielbar.

Das Material des in Fig. 1 dargestellten Verschlusskörpers kann ein gesinterter PTFE sein. Ebenso ist es denkbar, Kunststoff, insbesondere Permaflon ® oder Permeon ® zu verwenden.

Die vorliegende Erfindung lässt neben den hier aufgezeigten Ausführungsformen weitere Gestaltungsansätze zu. Mit der vorliegenden Erfindung wird erstmals ein Verschlusskörper für Atmungsöffnungen in Gehäusen, insbesondere in Bremszylindergehäusen von Bremszylindern oder in Bremssätteln für Nutz- oder für Schienenfahrzeuge vorgeschlagen, wobei dieser Verschlusskörper aus einem Material einstückig hergestellt wird, das Luft- und/oder Feuchtigkeit aus dem Inneren des Gehäuses entweichen lässt, ein Eindringen von Schmutz und/oder Feuchtigkeit oder dergleichen jedoch verhindert.

### Bezugszeichenliste

| **Ziffer** | **Merkmal** |
|---|---|
| 1 | Bremszylindergehäuse |
| 2 | Montagemittel |
| 4 | Verschlusskörper |
| 6 | Atmungsöffnung |
| 8 | Kopf des Verschlusskörpers |
| 10 | Abschnitt (Einschnürung) |
| 12 | Innerhalb des Gehäuses befindliche Abschnitt |
| 14 | Fase |
| 16 | Hohlraum |
| 18 | Dem Innenraum zugewandten Oberfläche |

## Patentansprüche

1. Gehäuse (1) mit wenigstens einer Atmungsöffnung (6), insbesondere Bremszylindergehäuse von Bremszylindern oder Bremssattel für Nutz- oder für Schienenfahrzeuge, **dadurch gekennzeichnet, dass** die Atmungsöffnung (6) von einem Verschlusskörper (4) verschlossen ist, welcher aus einem Material einstückig hergestellt ist, das Luft- und/oder Feuchtigkeit aus dem Inneren des Gehäuses (1) entweichen lässt, ein Eindringen von Schmutz und/oder Feuchtigkeit jedoch verhindert.

2. Gehäuse (1) nach Anspruch 1, **dadurch gekennzeichnet dass**, der Verschlusskörper (4) aus gesintertem PTFE hergestellt ist.

3. Gehäuse (1) nach Anspruch 1, **dadurch gekennzeichnet dass**, der Verschlusskörper (4) aus Kunststoff, insbesondere aus Permaflon ® oder Permeon ® hergestellt ist.

4. Gehäuse (1) nach einem der Ansprüche 1 bis 3, **dadurch gekennzeichnet, dass** der Verschlusskörper (4) als zylindrischer Körper ausgebildet ist.

5. Gehäuse (1) nach einem der Ansprüche 1 bis 4, **dadurch gekennzeichnet, dass** der Verschlusskörper (4) zumindest teilweise hohl ausgebildet ist.

6. Gehäuse (1) nach einem der Ansprüche 1 bis 5, **dadurch gekennzeichnet, dass** der Verschlusskörper (4) einen vorzugsweise linsenartig ausgebildeten Kopf (8) aufweist, dessen Durchmesser größer ist als der Durchmesser des restlichen Körpers.

## Claims

1. Housing (1) including at least one breathing opening (6), in particular a brake cylinder housing of brake cylinders or brake callipers for commercial or rail vehicles, **characterised in that** said breathing opening (6) is closed by a closure element (4) that is integrally made of a material permitting the escape of air and/or moisture from the interior of the housing (1) whilst it prevents, however, the penetration of dirt and/or moisture.

2. Housing (1) according to Claim 1, **characterised in that** said closure element (4) is made of sintered PTFE.

3. Housing (1) according to Claim 1, **characterised in that** said closure element (4) is made of a synthetic material, specifically of Permaflon® or Permeon®.

4. Housing (1) according to any of the Claims 1 to 3, **characterised in that** said closure element (4) is configured in the form of a cylindrical body.

5. Housing (1) according to any of the Claims 1 to 4, **characterised in that** said closure element (4) presents a hollow configuration, at least in parts.

6. Housing (1) according to any of the Claims 1 to 5, **characterised in that** said closure element (4) comprises a head (8) preferably of a lenticular configuration, whose diameter exceeds the diameter of the remaining part of the element.

## Revendications

1. Boîtier (1) comprend au moins une ouverture de gonflement (6), en particulier un boîtier du cylindre de frein des cylindres de frein ou étriers de frein pour véhicules utilitaires ou sur rails, **caractérisé en ce que** ladite ouverture des gonflement (6) est fermée par un élément de fermeture (4) fait intégralement d'un matériau permettant la fuite de l'air et/ou des l'humidité en dors du boîtier (1), en empêchant, cependant, la pénétration de crasse et/ou de l'humidité.

2. Boîtier (1) selon la revendication 1, **caractérisé en ce que** ledit élément de fermeture (4) est fait en PTFE fritté.

3. Boîtier (1) selon la revendication 1, **caractérisé en ce que** ledit élément de fermeture (4) est fait en un matériau synthétique, en particulier en Permaflon® ou Permeon®.

4. Boîtier (1) selon une quelconque des revendications 1 à 3, **caractérisé en ce que** ledit élément de fermeture (4) est configuré sous forme d'un corps cylindrique.

5. Boîtier (1) selon une quelconque des revendications 1 à 4, **caractérisé en ce que** ledit élément de fermeture (4) présente une configuration creuse, au moins en partie.

6. Boîtier (1) selon une quelconque des revendications 1 à 5, **caractérisé en ce que** ledit élément de fermeture (4) comprend une tête (8), des préférence d'une configuration lentiforme, dont le diamètre est plus grand que le diamètre de la partie restante de l'élément.
